(19) **Europäisches Patentamt / European Patent Office / Office européen des brevets**

(11) **EP 4 763 636 A1**

(12) **EUROPEAN PATENT APPLICATION**

(43) Date of publication:
24.06.2026 Bulletin 2026/26

(51) International Patent Classification (IPC):
*B60T 8/171* (2006.01)  *B60T 8/172* (2006.01)
*B60T 8/1763* (2006.01)  *B60W 40/068* (2012.01)

(21) Application number: 24221259.5

(22) Date of filing: **18.12.2024**

(52) Cooperative Patent Classification (CPC):
**B60T 8/171; B60T 8/172; B60T 8/1763; B60W 40/068;** B60T 2210/12; B60T 2210/124; B60W 2520/10; B60W 2520/26; B60W 2520/28; B60W 2520/30

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Car Corporation**
**405 31 Göteborg (SE)**

(72) Inventors:
• **JONASSON, Mats**
**40531 Göteborg (SE)**
• **YANG, Derong**
**40531 Göteborg (SE)**

(74) Representative: **Kransell & Wennborg KB**
**P.O. Box 2096**
**403 12 Göteborg (SE)**

(54) **A METHOD FOR ESTIMATING FRICTION BETWEEN DRIVABLE SURFACE AND TIRE OF A VEHICLE, METHOD FOR CONTROLLING A VEHICLE, DATA PROCESSING APPARATUS, COMPUTER PROGRAM, COMPUTER-READABLE STORAGE MEDIUM, AND VEHICLE**

(57) The disclosure relates to a method for estimating friction between a drivable surface and a tire of a vehicle and to a method for controlling the vehicle. The disclosure relates to a data processing apparatus, computer program, and computer-readable storage medium, each arranged for executing at least one of the methods, and to the vehicle. The estimating of the friction comprises: obtaining, during first phase of friction probing, first data comprising plurality of data items forming time series and indicating tire forces; obtaining, during second phase of friction probing, second data comprising plurality of data items forming time series and indicating tire forces; performing comparison of the first and second data with regard to reference data associated with at least one reference between the drivable surface and the tire of the vehicle; and indicating, based on result of the comparison, the friction between the drivable surface and the tire.

Fig. 1

**Description**

TECHNICAL FIELD

The present disclosure relates to a method for estimating a friction between a drivable surface and a tire of a vehicle and to a method for controlling the vehicle. The present disclosure relates further to a data processing apparatus, computer program, and computer-readable storage medium each arranged for executing at least one of the methods. Additionally, the present disclosure relates to a vehicle comprising the data processing apparatus.

BACKGROUND ART

The available tire-to-road friction limits the motion envelop of any road vehicle and is a hard constraint on all vehicle motion control functionality such as anti-lock braking system (ABS), electronic stability control (ESC), etc. For autonomous vehicles, this is even more pronounced and a correct prediction of the friction ahead of the vehicle is a necessity to ensure safe vehicle automation. The current state-of-the-art friction estimation approaches use physical vehicle motion and tire models. These approaches give correct estimates at the tire-to-road contact point, however, require a certain amount of tire forces to excite the tire slips for the grip estimation, leading to low data availability especially at relatively high road surface adhesion.

SUMMARY

The object of the present disclosure is improving road friction estimation.
The problem is at least partially solved or alleviated by the subject matter of the independent claims of the present disclosure, wherein further examples are incorporated in the dependent claims.
According to a first aspect, there is provided a method for estimating a friction between a drivable surface and a tire of a vehicle, the vehicle driving on the drivable surface. The method of the first aspect comprises: obtaining, during a first phase of friction probing, first data comprising a plurality of data items forming a time series and indicating tire forces; obtaining, during a second phase of friction probing, second data comprising a plurality of data items forming a time series and indicating tire forces; performing a comparison of the first data and the second data with regard to reference data associated with at least one reference friction between the drivable surface and the tire of the vehicle; and indicating, based on a result of the comparison, the friction between the drivable surface and the tire.
Friction probing is a well-known methodology that is used to measure and analyze the friction between vehicle's tires and the drivable (road) surface. Friction probing is crucial for understanding and improving automotive safety, particularly in areas such as braking efficiency, vehicle stability, and tire performance. A phase of friction probing is a time period, in which friction characteristics are determined. According to the present disclosure, characteristics associated with friction force, also known as skid resistance, are determined. The friction force is crucial for maintaining wheel grip on drivable (road) surfaces and reducing crash risks. The friction probing may be performed in real-time.
Obtaining first data is to be understood in the sense of receiving or determining the first data indicating tire forces. According to the present disclosure, the first data may be designated as data indicative of a number of tire forces because the first data comprises a plurality of data items forming a time series and indicating tire forces. The fact that the data items of the first data form a time series, obtained during a first phase of friction probing, means that the data items are obtained at consecutive (and regular) points in time during the first phase of friction probing. The data items may be seen as a sequence of data points (items) collected and ordered chronologically within said first phase. The chronological order means that the data points are arranged in time order, which may be, for example, from earliest to latest. Since the first data comprises a plurality of data items, the first data may be designated as a batch of data items. The data items of the batch may be processed together rather than individually.
The expression data or data items indicating tire forces means that said data or data items comprise values of tire forces and/or values associated with tire forces. In any case, the data or the data items allow obtaining the tire forces.
Similarly, obtaining second data is to be understood in the sense of receiving or determining the second data indicating tire forces. According to the present disclosure, also the second data may be designated as data indicative of a number of tire forces because the first data comprises a plurality of data items forming a time series and indicating tire forces. The fact that the data items of the second data form a time series, obtained during a second phase of friction probing, means that the data items are obtained at consecutive (and regular) points in time during the second phase of friction probing. The data items may be seen as a sequence of data points (items) collected and ordered chronologically within said second phase. As explained, the chronological order means that the data points are arranged in time order, which may be, for example, from earliest to latest. Since the second data comprises a plurality of data items, also the second data may be designated as a batch of data items. The data items of the batch may be processed together rather than individually.

According to the present disclosure, two phases of friction probing are executed, which improves the informative value of the obtained data associated with the tire forces and which enables obtaining comparable data associated with the tire forces under different conditions in the two phases. Thus, the friction is estimated based on friction probing, performed in real-time in two different phases (e.g., under different conditions). This improves the resulting friction estimate.

The present disclosure suggests comparing the first and second data, i.e., data of two different probing phases with regard to reference data associated with at least one reference friction between the drivable surface and the tire of the vehicle and indicating, based on the result of the comparison, the friction between the drivable surface and the tire. The first and second data may indicate different tire forces and, if the first and second data would be considered individually with regard to the reference data associated with at least one reference friction, friction estimates obtained for the first and second data individually could be different. The common consideration of the first and second data with regard to reference data enables common consideration of different conditions, which may appear during the two phases of friction probing, and, thereby, enables obtaining a most suitable friction estimate.

The comparability of the first and second data is given as both represent a corresponding plurality of data items forming a time series sequence of data points (items) collected and ordered chronologically within a respective phase of friction probing. Both indicate tire forces.

According to an example, the first data, the second data, and the reference data may indicate longitudinal tire forces, normal tire forces, tire slips, wheel speed, and/or vehicle speed. Additionally or alternatively to that, the first phase of friction probing may be a ramp-up phase of a probing torque or probing force and the second phase of friction probing may be a ramp-down phase of the probing torque or probing force.

Thus, the friction characteristics, associated with friction force and determined during the first and second phase of friction probing, may comprise longitudinal tire forces, normal tire forces, tire slips, wheel speed, and/or vehicle speed. Correspondingly, each of the plurality of data items, forming a time series and indicating tire forces and obtained correspondingly during the first or second phase of friction probing, will comprise longitudinal tire forces, normal tire forces, tire slips, wheel speed, and/or vehicle speed. As mentioned, also the reference data may indicate longitudinal tire forces, normal tire forces, tire slips, wheel speed, and/or vehicle speed. Thereby, the first and second data may be comparable as such and may be comparable with regard to the reference data.

Generally, the terms longitudinal tire forces, normal tire forces, tire slips, wheel speed, and vehicle speed are well known terms. Nevertheless, brief definitions of some of the terms are provided in the following.

The longitudinal tire forces are forces generated by a tire in the direction of its motion as it rolls on the pavement. The longitudinal tire forces are crucial for vehicle acceleration, braking, and overall handling performance.

Normal tire forces are vertical forces exerted by the ground on each tire of a vehicle. These forces are equal to the weight carried by each wheel and are crucial for determining the amount of traction a tire can provide.

Tire slip refers to a relative motion between a tire and the driving (road) surface, which can manifest in two primary forms: longitudinal slip and lateral slip. The longitudinal slip occurs when there is a difference between the rotational speed of the tire and the speed at which the vehicle is moving. It occurs during acceleration or braking and is typically expressed as a percentage. The lateral slip, often referred to as slip angle, is the angle between the direction a wheel is pointing and the direction it is actually traveling. The lateral slip occurs when there is an angle between the direction a tire is pointing and its actual path of travel. This typically happens, for example, during cornering or due to the deformation of the tire carcass and tread when the vehicle is turning or experiencing lateral forces.

As mentioned, the first phase of friction probing may be a ramp-up phase of a probing torque or probing force. The ramp-up phase is a time period where a gradual and controlled increase of torque or force is applied to drivetrain during initial stages of vehicle movement or acceleration for determining the friction characteristics associated with tire forces (e.g., longitudinal tire forces, normal tire forces, tire slips, wheel speed, and/or vehicle speed). In the ramp-down phase, vehicle's speed is correspondingly gradually increased. Thus, when during the ramp-up phase the first data with the corresponding plurality of data items forming a time series and indicating tire forces is obtained, each data item of the first data will comprise at least one of said characteristics determined at a certain time point of the ramp-up phase.

Further, as mentioned, the second phase of friction probing may be a ramp-down phase of the probing torque or probing force. The ramp-down phase is a time period where a gradual and controlled decrease of the applied torque or force is performed for determining the friction characteristics associated with tire forces (e.g., longitudinal tire forces, normal tire forces, tire slips, wheel speed, and/or vehicle speed). In the ramp-down phase, vehicle's speed is gradually decreased. Thus, when during the ramp-down phase the second data with the corresponding plurality of data items forming a time series and indicating tire forces is obtained, each data item of the first data will comprise at least one of said characteristics determined at a certain time point of the ramp-down phase.

According to an example, the first data may be real-time data obtained during the first phase of friction probing and the second data may be real-time data obtained during the second phase of friction probing. Thereby, the friction estimation may be performed in real-time depending on given circumstances.

According to an example, the reference data may comprise a reference data set, wherein each reference data entry of the reference data set is associated with a corresponding reference friction. Thereby, reference data for different reference friction values may be provided.

According to an example, the method may comprise obtaining, for at least one reference data entry of the reference data set, a corresponding reference friction for the reference data entry. Thus, the reference data entries may be developed according to relevant requirements and the reference friction values are then correspondingly determined with regard to the reference data entries.

According to an example, the obtaining of the corresponding reference friction for the reference data entry may comprise estimating the corresponding reference friction.

According to an example, each reference data entry of the reference data set may comprise: a plurality of data items forming a time series and indicating tire forces for the corresponding friction associated with the respective reference data entry of the reference data set; and/or an average value of values of data items of the plurality of data items. As mentioned above, the data items may indicate the longitudinal tire forces, normal tire forces, tire slips, wheel speed, and/or vehicle speed.

According to an example, the comparison of the first data and the second data with regard to the reference data may comprise comparing, with regard to each reference data entry of the reference data set, the average value of the reference data with a first average value, which is average value of values of data items of the plurality of data items of the first data, and with a second average value, which is average value of values of data items of the plurality of data items of the second data. Correspondingly, according to an example, the indicating, based on the result of the comparison, the friction between the drivable surface and the tire may comprise indicating, as the friction between the drivable surface and the tire, a friction associated with the reference data entry of the reference data set, the average value of which has the smallest distance to the first average value and the second average value in comparison to the average values of other reference data entries of the reference data set.

According to an example, the comparison of the first data and the second data with regard to the reference data may comprise comparing, with regard to each reference data entry of the reference data set, a curve of values of data items of the plurality of data items of the reference data entry with a first curve of values of data items of the plurality of data items of the first data, and with a second curve of values of data items of the plurality of data items of the second data. Correspondingly, according to an example, the indicating, based on the result of the comparison, the friction between the drivable surface and the tire may comprise indicating, as the friction between the drivable surface and the tire, a reference friction associated with the reference data entry of the reference data set, curve of values of which is closer to the first curve of values and the second curve of values in comparison to curves of values of other reference data entries of the reference data set.

According to an example, the performing the comparison of the first data and the second data with regard to reference data for at least one reference friction may comprise determining if an average value of the tire forces of the first data is higher than an average value of the tire forces of the second data and if a difference between the average value of the tire forces of the first data and the average value of the tire forces of the second data is higher than a threshold value associated with a friction for a slippery drivable surface in the reference data; and the indicating, based on the result of the comparison, the friction between the drivable surface and the tire may comprise indicating, as the between the drivable surface and the tire, the friction for a slippery drivable surface in the reference data, if the average value of the tire forces of the first data is higher than the average value of the tire forces of the second data and if the difference between the average value of the tire forces of the first data and the average value of the tire forces of the second data is higher than the threshold value associated with the friction for the slippery drivable surface, and indicating high friction drivable surface otherwise.

According to a second aspect of the present disclosure, a method for controlling a vehicle is provided, wherein the method comprises: estimating a friction between a drivable surface and a tire of the vehicle using the method according to any one of the preceding claims; and causing adjustment of a driving parameter of the vehicle based on the estimated friction. Thereby, a real-time vehicle control that is based on given circumstances may be performed.

Any one of the methods (i.e., the method of the first aspect and/or the method of the second aspect) may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a third aspect, there is provided a data processing apparatus comprising means for carrying out the steps of the method for estimating a friction between a drivable surface and a tire of a vehicle according to the first aspect and/or for carrying out the steps of the method for controlling the vehicle according to the second aspect.

According to a fourth aspect, there is provided a computer program comprising instructions which, when the program is executed by a computer, cause the computer to carry out the steps of the method for estimating a friction between a drivable surface and a tire of a vehicle according to the first aspect and/or to carry out the steps of the method for controlling the vehicle according to the second aspect.

According to a fifth aspect, there is provided a computer-readable storage medium comprising instructions which, when executed by a computer, cause the computer to carry out the steps of the method for estimating a friction between a drivable surface and a tire of a vehicle according to the first aspect and/or to carry out the steps of the method for controlling the vehicle according to the second aspect.

According to a sixth aspect, there is provided a vehicle comprising the data processing apparatus of the third aspect.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

BRIEF DESCRIPTION OF DRAWINGS

Examples of the disclosure will be described in the following with reference to the following drawings.

Figure 1    shows obtaining of first and second data according to an example of the present disclosure;
Figure 2    shows an exemplary arrangement of a data item in the first data and an exemplary arrangement of a data item in the second data according to an example of the present disclosure;
Figure 3    shows comparison of the first data and the second data with regard to reference data according to an example of the present disclosure;
Figure 4    shows an exemplary arrangement of reference data according to an example of the present disclosure;
Figure 5    shows an exemplary arrangement of a reference data entry according to an example of the present disclosure;
Figure 6    shows an exemplary arrangement of a reference data entry according to an example of the present disclosure;
Figure 7    shows exemplary values of first and second data with regard to and in comparison to reference data according to an example of the present disclosure;
Figure 8    shows exemplary values of first and second data with regard to and in comparison to reference data according to an example of the present disclosure;
Figure 9    shows exemplary values of first and second data with regard to and in comparison to reference data according to an example of the present disclosure;
Figure 10    shows exemplary steps for identifying slippery drivable surface according to an example of the present disclosure;
Figure 11    shows steps of a method for estimating a friction between a drivable surface and a tire of a vehicle according to an example of the present disclosure;
Figure 12    shows steps of a method for controlling the vehicle according to an example of the present disclosure;
Figure 13    shows an exemplary data processing apparatus according to an example of the present disclosure; and
Figure 14    shows a vehicle according to an example of the present disclosure.

DETAILED DESCRIPTION

The Figures are merely schematic representations and serve only to illustrate examples of the disclosure. Identical or equivalent elements are in principle provided with the same reference signs.

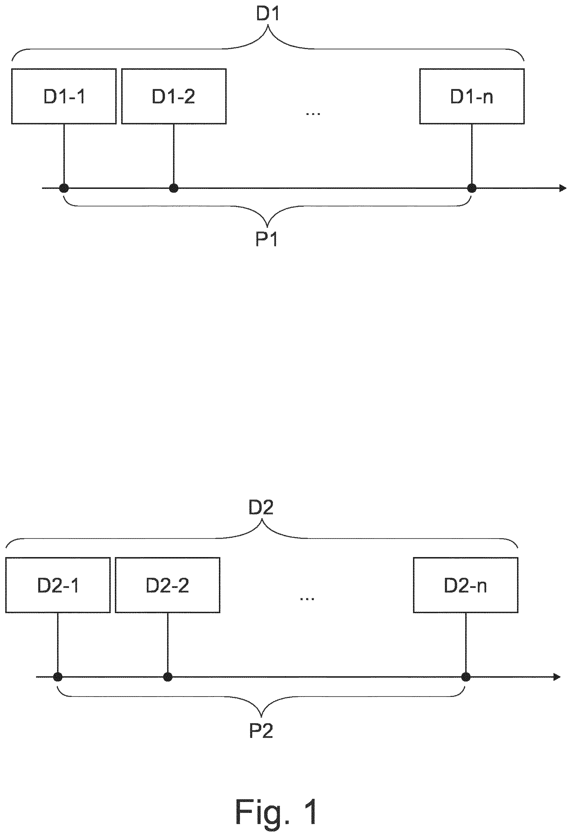

Figure 1 shows obtaining of first data D1 and of second data D2 for estimating a friction between a drivable surface and a tire of a vehicle according to an example of the present disclosure. The data D1 and D2 is obtained in two different friction probing phases P1 and P2, which may be subsequent.

With regard to obtaining of the first data D 1, Figure 1 indicates a time line (vertical arrow in Figure 1), wherein the first friction probing phase P1 is performed during a certain time period indicated in Figure 1. During said time period and, thus, during the first friction probing phase P 1, at different consecutive points of time of said time period/first friction probing phase P1 data items D1-1, D1-2, ..., D1-n (n>=1) of the first data D1 are obtained. Each data item D1-1, D1-2, ..., D1-n is indicative of a corresponding tire force for a respective point of time, at which the data item D1-1, D1-2, ..., D1-n has been obtained. See in Figure 1 the associations between each data item D1-1, D1-2, ..., D1-n and a respective point of time on the time line.

Similarly, also with regard to obtaining of the second data D2, Figure 1 indicates a time line (vertical arrow in Figure 1), wherein the second friction probing phase P2 is performed during a certain time period indicated in Figure 1. During said time period and, thus, during the second friction probing phase P2, at different consecutive points of time of said time period/second friction probing phase P2 data items D2-1, D2-2, ..., D2-n (n>=1) of the second data D2 are obtained. Each data item D2-1, D2-2, ..., D2-n is indicative of a corresponding tire force for a respective point of time, at which the data item D2-1, D2-2, ..., D2-n has been obtained. See in Figure 1 the associations between each data item D2-1, D2-2, ..., D2-n and a respective point of time on the time line.

As outlined above, a data D1, D2 or a data item D1-1, D1-2, ..., D1-n, D2-1, D2-2, ..., D2-n indicative of tire forces means that it comprises or is associated with at least one tire force value and/or tire force related value.

The obtaining of the first data D1 and the second data D2 may be performed in real-time. Thus, the first data D1 may be real-time data obtained during the first phase of friction probing P1 and the second data D2 may be real-time data obtained during the second phase of friction probing P2.

Further, the first phase of friction probing P1 may be a ramp-up phase of a probing torque or probing force. The second phase of friction probing P2 may be a ramp-down phase of the probing torque or probing force. Thus, in the first phase P1 a gradual and controlled increase of torque or force may be applied to drivetrain, while in the second phase P2 a gradual and controlled decrease of torque or force may be applied to drivetrain. The two phases P1 and P2 mean the presence of two different conditions for measuring or determining data associated with tire forces. The data measured and/or determined during the two phases P1 and P2 may be noted, maintained, and/or stored in the first and second data D1, D2.

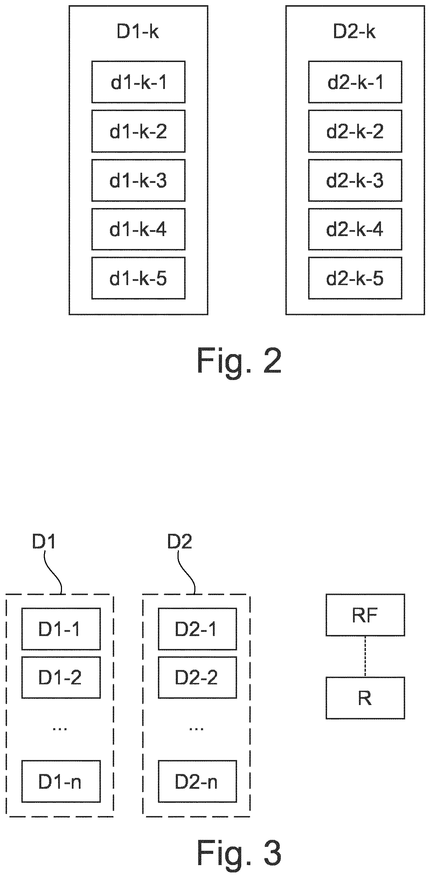

Correspondingly, each one of the data items D1-1, D1-2, .., D1-n, D2-1, D2-2, ..., D2-n of the first data D1 and of the second data D2 may note, maintain, and/or store data measured and/or determined at a corresponding point of time, with which the respective data item D1-1, D1-2, .., D1-n, D2-1, D2-2, ..., D2-n is associated, i.e. at which the respective data item D1-1, D1-2, .., D1-n, D2-1, D2-2, ..., D2-n has been obtained (e.g., measured and/or determined). This is indicated in Figure 2.

Figure 2 shows an exemplary arrangement of a data item D1-k in the first data D1 and an exemplary arrangement of a data item D2-k in the second data D2 according to an example of the present disclosure. The data item D1-k may be seen as a representative of the items D1-1, D1-2, .., D1_n in the first data D1. Thus, any one of the items D1-1, D1-2, .., D1_n in the first data D1 may have the arrangement as shown with respect to D1_k, wherein 1 <= k <=n. Similarly, the data item D2_k may be seen as a representative of the items D2-1, D2-2, .., D2_n in the second data D2. Thus, any one of the items D2-1, D2-2, ..., D2-n in the second data D2 may have the arrangement as shown with respect to D2_k, wherein 1 <= k <=n.

Both the data item D1-k and the data item D2-k may indicate (e.g., comprise) at least one of the following tire forces or tire force (related) values respectively obtained (e.g., measured and/or determined) at a point of time, with which the data item D1-k, D2-k is associated, i.e. at which the data item D1-k, D2-k has been obtained: a longitudinal tire force d1-k-1, d2-k-1, a normal tire force d1-k-2, d2-k-2, a tire slip d1-k-3, d2-k-3, wheel speed d1-k-4, d2-k-4, and/or vehicle speed d1-k-5, d2-k-5. It has to be noted that the tire force values d1-k-1 to d1-k-5, d2-k-1 to d2-k-5 are provided exemplary and that the present disclosure is not limited to said tire force values d1-k-1 to d1-k-5, d2-k-1 to d2-k-5 only. Any other tire force values that may be obtained during the first and the second friction probing phase P1, P2 may be also indicated in the data items D1-k, D2-k of the first and second data D1, D2.

Figure 3 indicates a comparison of the first data D1 and the second data D2 with regard to reference data R associated with at least one reference friction RF between the drivable surface and the tire of the vehicle. Generally, reference data R may be understood as a set of values, wherein (value(s) of) each entry of the set classifies or categorizes a particular friction RF between a drivable surface (e.g., road) and a tire of a vehicle. Correspondingly, the reference data R is indicative of at least one reference friction RF between the drivable surface and the tire of the vehicle.

By comparison of the first data D1 and the second data D2 with regard to reference data F indicative of at least one reference friction RF, a categorization/classification of the friction between a drivable surface (e.g., road) and a tire of a vehicle based on the fist data D1 and the second data D2 may be performed. Thus, when both the first data D1 and the second data D2 is obtained in real-time, a real-time estimation of the current friction between the drivable surface (e.g., road) and a tire of a vehicle driving on the drivable surface may be performed. The estimated friction will be a friction resulting from the comparison of the first data D1 and the second data D2 with regard to reference data F, i.e. the reference friction RF resulting from said categorization/classification.

As indicated above, also the reference data R may indicate at least one of the following (tire force or tire force related) values: a longitudinal tire force, a normal tire force, a tire slip, wheel speed, and/or vehicle speed. For example, the reference data R may comprise a reference data set, wherein each reference data entry of the reference data set is associated with a corresponding reference friction RF.

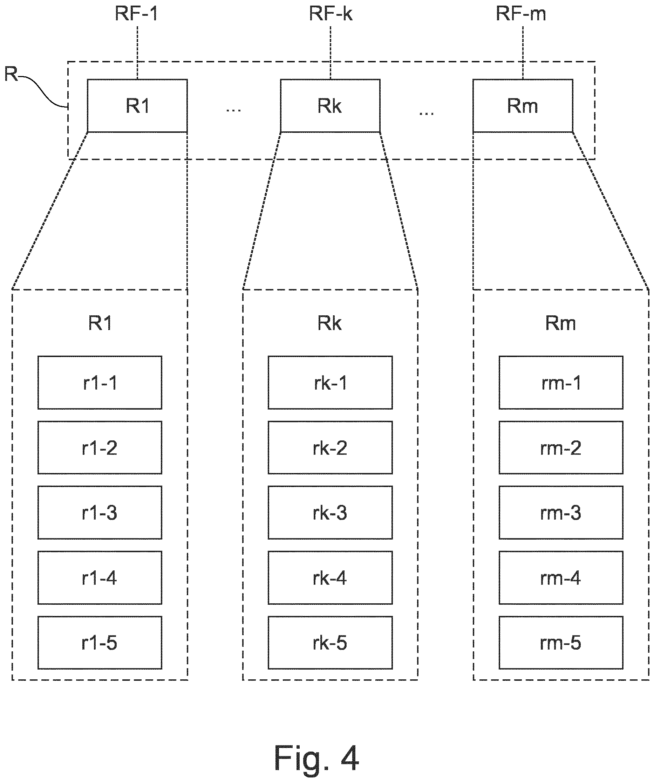

This is exemplary visualized in Figure 4. According to the example of Figure 4, the reference data R comprises a reference data set with at least one reference data entry R1, ..., Rk, ..., Rm, wherein n >=1 and 1 <= k <= m. Each reference data entry R1, ..., Rk, ..., Rm is associated with a corresponding reference friction RF-1, ..., RF-k, ..., RF-m. Further, according to the example of Figure 4, each reference data entry R1, ..., Rk, ..., Rm of the set of the reference data R may indicate at least one of the following (reference) values, which are tire force and/or tire force related values: (reference) longitudinal tire force r1-1, ..., rk-1, ..., rm-1, (reference) normal tire force r1-2, ..., rk-2, ..., rm-2, (reference) tire slip r1-3, ..., rk-3, ..., rm-3, (reference) wheel speed r1-4, ..., rk-4, ..., rm-4, and/or (reference) vehicle speed r1-5, ..., rk-5, ..., rm-5. Thereby, each reference data entry R1, ..., Rk, ..., Rm may indicate that the respective (reference) values of the corresponding reference data entry R1, ..., Rk, ..., Rm result in a corresponding reference RF-1, ..., RF-k, ..., RF-m. It has to be noted, according to the present disclosure, that said (reference) values are not limited to the above-listed values only. Any values that may lead to determination or estimation of a friction between a drivable surface (e.g., road) and a tire of a vehicle, driving on the drivable surface, may be indicated by the reference data R, i.e., by the reference data entries R1, ..., Rk, ..., Rm of the set of the reference data R.

Thus, the comparison of the first data D1 and the second data D2 with regard to reference data F may result in a reference friction RF, RF-1, ..., RF-k, ..., RF-m that is associated with a reference data entry R1, ..., Rk, ..., Rm, (reference), values of which are closest to the values of the data items D1-1, D1-2, ..., D1-n, D1-k of the first data D1 and to the values of the data items D2-1, D2-2, ..., D2-n, D2-k of the first data D2.

A reference friction RF, RF-1, ..., RF-k, ..., RF-m for a reference data entry R1, ..., Rk, ..., Rm may be obtained specifically for the respective reference data entry R1, ..., Rk, ..., Rm. For example, the reference friction RF, RF-1, ..., RF-k, ..., RF-m may be obtained by applying any one of well-known methods for determining or estimating the friction. The reference friction RF, RF-1, ..., RF-k, ..., RF-m may be obtained, for example, based on the (reference) values r1-1 to r1-5, ..., rk-1 to rk-5, ..., rm-1 to rm-5 of the reference data entry R1, ..., Rk, ..., Rm by applying any one of well-known methods for determining or estimating the friction based on said values such as longitudinal tire forces, normal tire forces, tire slips, wheel speed, and/or vehicle speed, etc., for example.

According to an example, each reference data entry R1, ..., Rk, ..., Rm of the reference data set or reference data R respectively comprises: a plurality of data items forming a time series and indicating tire forces for the corresponding friction associated with the respective reference data entry of the reference data set; and/or an average value of values of data items of the plurality of data items.

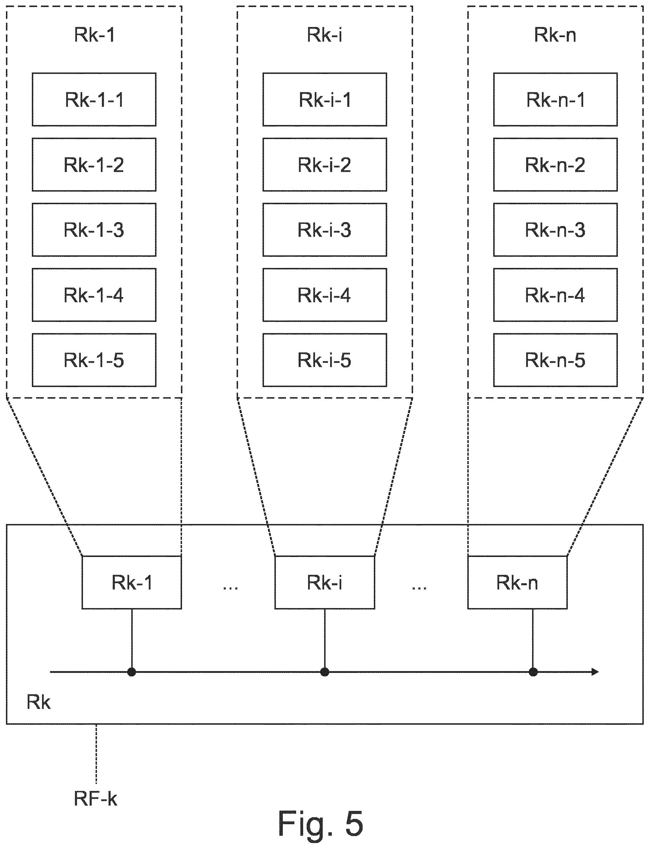

Figure 5A shows an exemplary arrangement of corresponding reference data entries Rk (1 <=k<=m) according to the examples of the present disclosure.

In Figure 5, an exemplary arrangement of a reference data entry Rk is shown, which may be seen as a representative for any one of the reference data entries R1, ..., Rk, ..., Rm of the reference data set or reference data R. The reference data entry Rk comprises a plurality of data items Rk-1, ..., Rk-i, ..., Rk-n forming a time series, wherein 1 <= i <=n. Each data item Rk-1, ..., Rk-i, ..., Rk-n may be assumed as being obtained at a certain time point.

. Further, according to the example of Figure 5, each data item Rk-1, ..., Rk-i, ..., Rk-n of the reference data entry Rk of the reference data R may indicate at least one of the following (reference) values, which are tire force values and/or tire force related values: (reference) longitudinal tire force Rk-1-1, ..., Rk-i-1, ..., Rk-n-1, (reference) normal tire force Rk-1-2, ..., Rk-i-2, ..., rm-2, (reference) tire slip Rk-1-3, ..., Rk-i-3, ..., Rk-n-3, (reference) wheel speed Rk-1-4, ..., Rk-i-4, ..., Rk-n-4, and/or (reference) vehicle speed Rk-1-5, ..., Rk-i-5, ..., Rk-n-5.

When, according to an example of the present disclosure, each reference data entry R1, ..., Rk, ..., Rm of the reference data set or reference data R respectively comprises an average value of values of data items of the plurality of data items. The arrangement of the reference data entry R1, ..., Rk, ..., Rm may be as in Figure 4 or may be a combination of examples of Figures 4 and 5, wherein the values r1-1 to r1-5, rk-1 to rk-5, and rm-1 to rm-5 of Figure 4 may then represent corresponding average values.

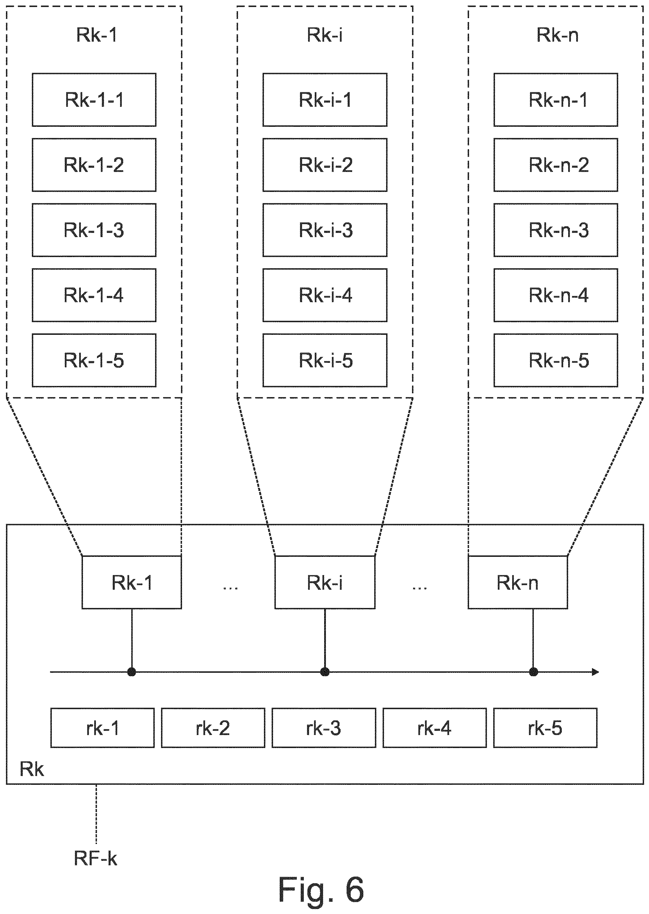

An exemplary arrangement of a reference data entry Rk that comprises a plurality of data items Rk-1, ..., Rk-i, .., Rk-n forming a time series and indicating tire forces for the corresponding friction RF-k associated with the reference data entry Rk and that comprises the at least one average value r1-1 to r1-5, rk-1 to rk-5, and rm-1 to rm-5 is shown in Figure 6.

When performing a comparison of the first data D1 and the second data D2 with regard to reference data R, the comparison may comprise comparing, with regard to each reference data entry R1, ..., Rk, ..., Rm of the reference data set, an average value r1-1 to r1-5, rk-1 to rk-5, and rm-1 to rm-5 with a corresponding first average value, which is an average value of corresponding values d1-k-1 to d1-k-5 of data items D1-k of the plurality of data items of the first data D1, and with a corresponding second average value, which is average value of corresponding values d2-k-1 to d2-k-5 of data items D2-k of the plurality of data items of the second data D2. It should be a matter of course that values relating of longitudinal tire forces are compared with each other, values relating to normal tire forces are compared with each other, values relating to tire slips are compared with each other, values relating to wheel speed are compared with each other, and/or values relating to vehicle speed are compared with each other, etc.

The indicating of the friction between the drivable surface and the tire, resulting from the comparison, may comprise the indicating, as the friction between the drivable surface and the tire, a friction RF, RF-1, ..., RF-k, ..., RF-m associated with the reference data entry R1, ..., Rk, ..., Rm of the reference data set R, the average value of which has the smallest distance to the first average value and the second average value in comparison to the average values of other reference data entries R1, ..., Rk, ..., Rm of the reference data set R.

According to an example of the present disclosure, the comparison of the first data D1 and the second data D2 with regard to the reference data R comprises comparing, with regard to each reference data entry R1, ..., Rk, ..., Rm of the reference data set R, a curve of values of data items Rk-1, ..., Rk-i, ..., Rk-n of the plurality of data items of the reference data entry R1, ..., Rk, ..., Rm with a first curve of values of data items D1-1, D1-2, ..., D1-n of the plurality of data items of the first data D1, and with a second curve of values of data items D2-1, D2-2, ..., D2-n of the plurality of data items of the second data D2.

The indicating of the friction between the drivable surface and the tire, resulting from the comparison, may then comprise a reference friction RF, RF-1, ..., RF-k, ..., RF-m associated with the reference data entry R1, ..., Rk, ..., Rm of the reference data set R, curve of values of which is closer to the first curve of values and the second curve of values in comparison to curves of values of other reference data entries R1, ..., Rk, ..., Rm of the reference data set R.

According to an example of the present disclosure, the performing of the comparison of the first data D1 and the second data D2 with regard to reference data R for at least one reference friction RF, RF-1, ..., RF-k, ..., RF-m may comprise determining if an average value of (or related to) the tire forces of the first data D1 is higher than an average value of the tire forces of the second data D2 and if a difference between the average value of the tire forces of the first data D1 and the average value of the tire forces of the second data D2 is higher than a threshold value associated with a reference friction RF, RF-1, ..., RF-k, ..., RF-m for a slippery drivable surface in the reference data R. In this case, the indicating, based on the result of the comparison, the friction between the drivable surface and the tire may comprise indicating, the reference friction RF, RF-1, ..., RF-k, ..., RF-m for a slippery drivable surface in the reference data R, if the average value of the tire forces of the first data D1 is higher than the average value of the tire forces of the second data D2 and if the difference between the average value of the tire forces of the first data D1 and the average value of the tire forces of the second data D2 is higher than the threshold value associated with the friction RF, RF-1, ..., RF-k, ..., RF-m for the slippery drivable surface, and indicating high friction drivable surface otherwise.

The present disclosure proposes, thus, a new idea on how to identify weather the drivable surface (e.g., road) is having low friction slippery risk or not, i.e. on how to differentiate low or high road friction coefficient, under the active probing. The idea is based on the observation from the real-time data, which on the other hand proves the effectiveness and advantages of the proposed solution. The present disclosure provides an efficient and simple implementation for identifying slippery road condition by active probing with high confidence and robustness. The present disclosure also enhances the technical value and potential of active probing from a new perspective.

In general, the idea behind the present disclosure may be seen in finding out, at different phases of the active probing, different patterns of producing tire-to-road friction forces, i.e. frictions between a drivable surface and a tire of a vehicle. The patterns may be distinctive among different friction surfaces and, therefore, may be used for identifying slippery drivable surfaces (e.g., roads).

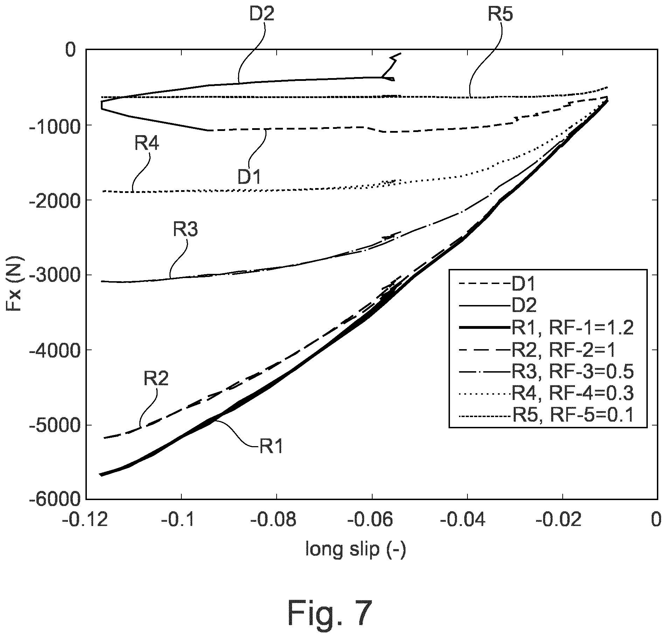

Each of Figures 7, 8, and 9 shows exemplary values of first data D1 and of second data D2 with regard to and in comparison to reference data R according to a respective example of the present disclosure. The first data D1, the second data D2, and the reference data R are visualized as curves. The examples relate to different friction values, i.e. to low to high drivable surface (e.g., road) friction surfaces.

In the example of Figure 7, the first and second data D1 to D2 reflect conditions of icy drivable surfaces (e.g., roads) with very or extreme low friction, i.e. at around 0.1 friction coefficient, indicated by reference friction RF-5.

Figure 7 shows the measurements of the two phases, i.e. the first data D1 and the second data D2. The first data D1 is obtained during the first phase P1 of friction probing, e.g., in the ramp-up phase. The second data D2 is obtained during the second phase P2 of friction probing, e.g., in the ramp-down phase.

In the example of Figure 7, the horizontal axis indicates values of the tire slip. The vertical axis indicates values of tire force at low friction drivable surface. Thus, the graph of Figure 7 visualizes the tire slip versus tire force at low drivable friction surface.

Correspondingly, the first data D1 comprises a plurality of data items D1-1, D1-2, ..., D1-n, forming a time series and each indicating a (longitudinal) tire force at the low friction drivable surface and the tire slip at a given point of time during the first phase P1 of friction probing, e.g., in the ramp-up phase. The second data D2 comprises a plurality of data items D2-1, D2-2, ..., D2-n, forming a time series and each indicating a (longitudinal) tire force at the low friction drivable surface and the tire slip at a given point of time during the second phase P1 of friction probing, e.g., in the ramp-down phase. The first data D1 and the second data D2 comprise data obtained in real-time. Based on the data D1, D2 obtained during the respective friction probing phases P1, P2, corresponding tire-to-drivable surface (e.g., road) friction characteristic curves are created in the example of Figure 7 and are referred to also as friction characteristic curves in the following.

The reference data R of the example of Figure 7, comprises five reference data entries R1, R2, R3, R4, and R5. Each of the reference data entries R1, R2, R3, R4, and R5 may be seen as comprising a plurality of data items Rk-1, ..., Rk-i, ..., Rk-n, forming a time series and each indicating a (longitudinal) tire force at the low friction drivable surface and the tire slip at a (assumed) given point of time. Further, each one of the five reference data entries R1, R2, R3, R4, and R5 is associated with a corresponding reference friction RF, RF-1, ..., RF-k, ..., RF-m between a drivable surface and a tire of a vehicle. In the example of Figure 7, reference data entry R1 has a reference friction RF-1 of 1.2, reference data entry R2 has a reference friction RF-2 of 1, reference data entry R3 has a reference friction RF-3 of 0.5, reference data entry R4 has a reference friction RF-4 of 0.3, and reference data entry R5 has a reference friction RF-5 of 0.1. Based on the data of the reference data entries R1 to R5, corresponding reference tire-to-drivable surface (e.g., road) friction characteristic curves are generated in the example of Figure 7 and will be referred to also as reference friction characteristic curves in the following. Each one of the five reference friction characteristic curves is associated with the corresponding reference friction RF-1, RF-2, RF-3, RF-4, and RF-5.

In the example of Figure 7, the tire characteristic curves, build based on the first data D1, second data D2, and the reference data R (comprising R1 to R5), are based on a simple tire model, which may be expressed by the following equation:

$$Fxe\_mu = mu*Fz.*tanh(C0*sx./mu) \quad (Equation\ 1),$$

where Fxe_mu is a longitudinal tire force at given reference tire-to-road friction RF, RF-1, ..., RF-k, ..., RF-m, Fz is a tire vertical force, C0 is a normalized tire longitudinal stiffness e.g. 10 [1/rad], and sx is the tire longitudinal slip.

It is to be pointed out that the present disclosure is not limited to the above-indicated tire model only. Said tire model is exemplary and for a better understanding of the present disclosure. Any other appropriate tire model may be established according to the present disclosure as well.

As in the tire model, each data item of the plurality of data items D1-1, D1-2, ..., D1-n of the first data D 1, of the plurality of data items D2-1, D2-2, ..., D2-n of the second data D2, and of the plurality of data items Rk-1, ..., Rk-i, ..., Rk-n additionally indicates a tire vertical force and a tire longitudinal slip.

Based on the curves in Figure 7, the obtained (e.g., measured) tire forces Fx of the first data D1 and of the second data D2 may be compared with the reference tire forces Fx from the reference data R (comprising R1 to R5). If the obtained (e.g., measured) tire forces Fx of the first data D1 and of the second data D2 are close to reference tire forces Fx of one of the reference friction characteristic curves R1 to R5, then the friction value of the friction between a drivable surface and a tire of a vehicle is settled to (i.e., estimated as) the reference friction value represented by the closest reference friction characteristic curve R1 to R5.

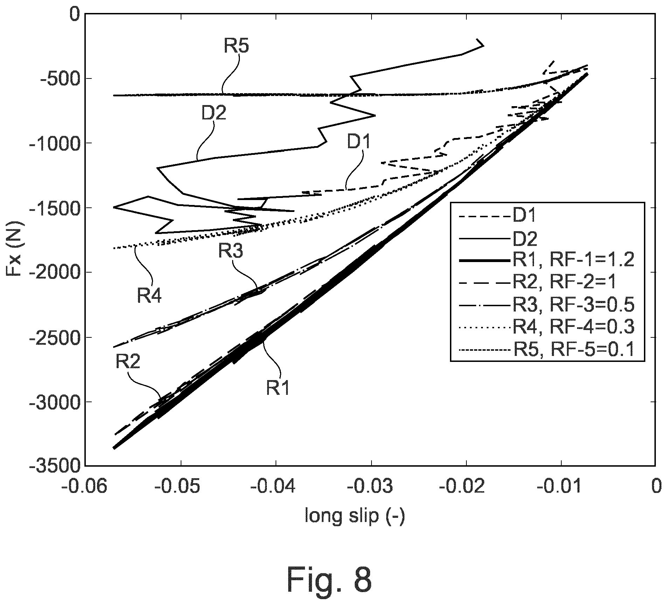

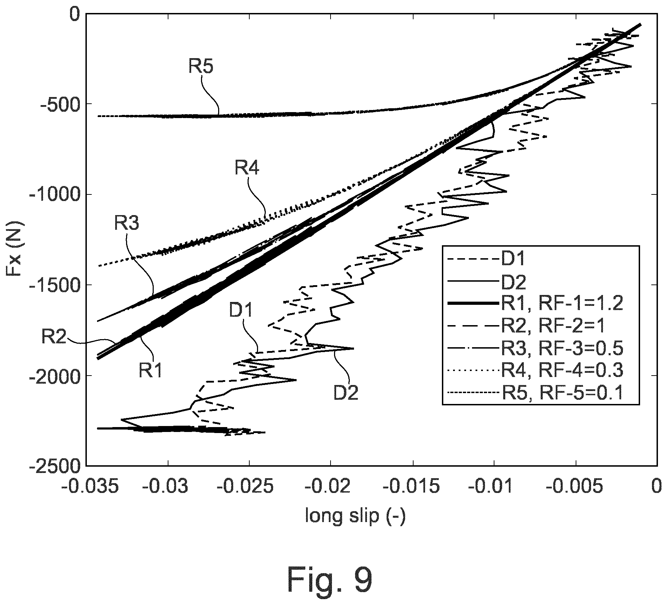

Figures 8 and 9 show similar arrangements enabling comparison of the first and second data D1, D2 with the respective reference data R comprising corresponding reference data entries R1 to R5. In comparison to Figure 7, Figure 8 shows tire slips versus tire forces at middle friction drivable surfaces and Figure 9 shows tire slips versus tire forces at high friction drivable surfaces. Thus, the vertical axis of Figure 8 indicates values of tire forces at middle friction drivable surface and the vertical axis of Figure 9 indicates values of tire forces at high friction drivable surface.

When considering the curves in Figure 7, the friction characteristic curve of the first data D1 indicates a higher friction than the friction characteristic curve of the second data D2 because the friction characteristic curve of the first data D1 is closer to the reference friction characteristic curve of reference data entry R4 having the reference friction RF-4 of 0.3, while the friction characteristic curve of the second data D2 is closer to the reference friction characteristic curve of reference data entry R5 having the reference friction RF-5 of 0.1. Similar situation is present also in Figure 8 indicating values of tire forces at middle friction drivable surface such as gravel road. The opposite situation is present in Figure 9 indicating values of tire forces at high friction drivable surface such as dry asphalt road. In Figure 9, the friction characteristic curve of the first data D1 indicates slightly lower friction than the friction characteristic curve of the second data D2. Based on these observations, a slippery drivable surface may present when the friction between the drivable surface and the vehicle's tire is decreasing during the whole friction probing, i.e. from the first phase P1 of the friction probing to the second phase P2 of the friction probing and when the difference between the friction during the first phase P1 and the friction during the second phase P2 is higher than a threshold value. The threshold value may correspond to a reference friction that indicates a (relatively) low friction drivable surface, i.e. that is associated a slippery drivable surface. When considering the examples of Figures 7, 8, and 9, the threshold value may be, for example, RF-4, which is 0.3. The threshold value may be one of the smaller reference friction values.

Thus, the following steps can be defined with regard to the identification of a slippery drivable surface:

*If*

    *a first reference friction RF, RF-1, ..., RF-k, ..., RF-m, RF-1 to RF-5, associated with a reference data entry R1, ..., Rk, ..., Rm, R1 to R5 tire force (related) values of which are closer to the tire force (related) values of the first data D1 than tire force (related) values of the other reference data entries R1, ..., Rk, ..., Rm, R1 to R5, is higher than a second reference friction RF, RF-1, ..., RF-k, ..., RF-m, RF-1 to RF-5, associated with a reference data entry R1, ..., Rk, ..., Rm, R1 to R5 tire force (related) values of which are closer to the tire force (related) values of the second data D2 than tire force (related) values of the other reference data entries R1, ..., Rk, ..., Rm, R1 to R5, which means that the friction between the drivable surface and the vehicle's tire is decreasing during the whole friction probing, i.e. from the first phase P1 of the friction probing to the second phase P2 of the friction probing,*

*and if*

    *a difference between the first reference friction RF, RF-1, ..., RF-k, ..., RF-m, RF-1 to RF-5 and the second reference friction RF, RF-1, ..., RF-k, ..., RF-m, RF-1 to RF-5 is higher than a threshold value (e.g., 0.3, which is RF-4 and indicates slippery drivable surface)*

*then*

    *the drivable surface is identified as being slippery (which may mean that the estimated friction is under 0.3, i.e., under RF-4)*

*else*

    *the drivable surface is identified as being NOT slippery (which may mean that the estimated friction is over 0.3, i.e. over RF-4), the drivable surface may be identified as being high friction drivable surface, for example.*

The identification of a slippery surface may be defines also as follows:

*If*

> *an average value of the tire force (related) values of the first data D1 is higher than an average value of the tire force (related) values of the second data D2, which means that the friction between the drivable surface and the vehicle's tire is decreasing during the whole friction probing, i.e. from the first phase P1 of the friction probing to the second phase P2 of the friction probing*

*and if*

> *a difference between the average value of the tire force (related) values of the first data D1 and the average value of the tire forces of the second data D2 is higher than a threshold value associated with a friction RF, RF-1, ..., RF-k, ..., RF-m, RF-1 to RF-5 for a slippery drivable surface in the reference data R (e.g., 0.3, which is RF-4 and indicates slippery drivable surface)*

*then*

> *the drivable surface is identified as being slippery (which may mean that the estimated friction is under 0.3, i.e., under RF-4)*

*else*

> *the drivable surface is identified as being NOT slippery (which may mean that the estimated friction is over 0.3, i.e. over RF-4), the drivable surface may be identified as being high friction drivable surface, for example.*

The above-described slippery drivable surface identification may be performed in a fast and efficient way in real-time.

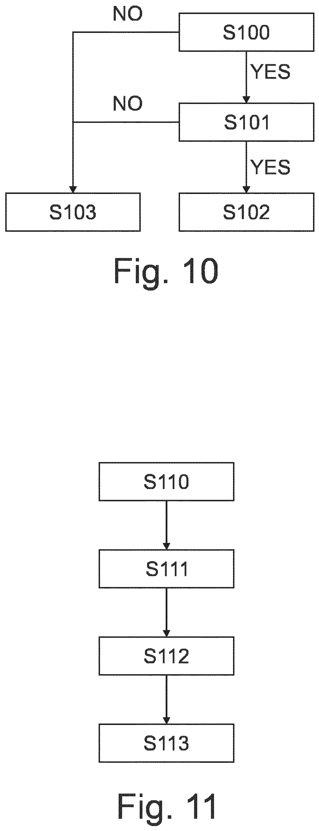

Figure 10 exemplary shows the steps of the above-described slippery drivable surface identification. In step S100, the first if-condition is verified. Generally, it is verified whether or not the friction between the drivable surface and the vehicle's tire is decreasing during the whole friction probing, i.e. from the first phase P1 of the friction probing to the second phase P2 of the friction probing. If it is the case (see in Figure 10 the YES-arrow between steps S100 and S101), in step S101 the second if-condition is verified. Generally, it is verified whether or not the difference between the friction during the first phase P1 and the friction during the second phase P2 is higher than the threshold value. If it is the case (see in Figure 10 the YES-arrow between steps S101 and S102), in step S102, the drivable surface is identified as being slippery. Otherwise (see in Figure 10 the NO-arrows between the steps S100 and S103 and between the steps S101 and S103), the drivable surface is identified as being not slippery in step S103. For example, in step S103, the drivable surface may be identified as being high friction drivable surface, for example.

Figure 11 shows steps of a method for estimating a friction RF, RF-1, ..., RF-k, ..., RF-m, RF-1 to RF-5 between a drivable surface and a tire of a vehicle according to an example of the present disclosure.

In step S110 of Figure 11, first data D1, comprising a plurality of data items D1-1, D1-2, ..., D1-n, D1-k forming a time series and indicating tire forces, is obtained during a first phase P1 of friction probing. In step S111, second data D2, comprising a plurality of data items D2-1, D2-2, ..., D2-n, D2-k forming a time series and indicating tire forces, is obtained during a second phase P2 of friction probing. As described above, steps S 110 and S111 may be preformed in real-time and the first data D1 and the second data D2 may represent real-time data. In step S112, a comparison of the first data D1 and the second data D2 with regard to reference data R, associated with at least one reference friction RF, RF-1, ..., RF-k, ..., RF-m, RF-1 to RF-5 between the drivable surface and the tire of the vehicle, is performed. In step S113, the friction RF, RF-1, ..., RF-k, ..., RF-m, RF-1 to RF-5 between the drivable surface and the tire is indicated based on the result of the comparison.

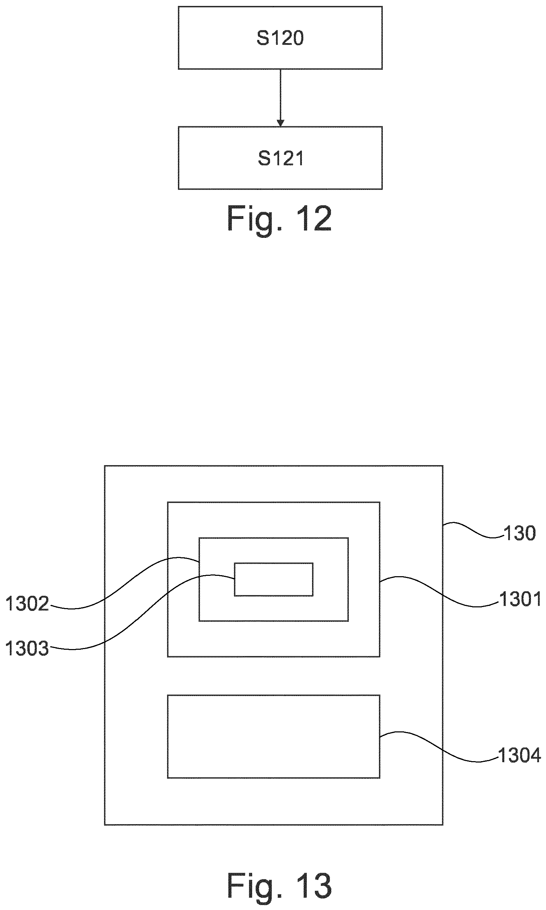

According to the present disclosure, the above-described methodologies may be used for controlling the vehicle. Figure 12 shows steps of a method for controlling the vehicle according to an example of the present disclosure. In step S120, friction RF, RF-1, ..., RF-k, ..., RF-m, RF-1 to RF-5 between the drivable surface and the tire of the vehicle is estimated by using the method as described above and as visualized in Figure 11. In step S121, adjustment of a driving parameter of the vehicle based on the estimated friction RF, RF-1, ..., RF-k, ..., RF-m, RF-1 to RF-5 is caused. The driving parameter may be a driving safety related parameter. For example, if the estimated friction RF, RF-1, ..., RF-k, ..., RF-m, RF-1 to RF-5 is a friction for a slippery drivable surface, the driving parameter may be a corresponding indication to the driver of the vehicle warning the driver with regard to the slippery drivable surface, identified based on the estimated friction RF, RF-1, ..., RF-k, ..., RF-m, RF-1 to RF-5. The adjustment of the parameter may correspond to amending the value of the parameter such that the corresponding indication will be presented to the driver of the vehicle. Any other driving parameters such as driving safety related parameters may be adjusted according to the present disclosure correspondingly.

At least one of the above-described steps and/or at least one of the above-described methods may be performed by at least one data processing apparatus comprising means for carrying out at least one of said steps and/or at least one of said methods. Figure 13 shows an exemplary data processing apparatus 130 according to an example of the present disclosure.

The data processing apparatus 130 may comprise a data storage unit 1301 and a data processing unit 1304.

The data storage unit 1301 may comprise a computer-readable storage medium 1302.

On the computer-readable storage medium 1302, there may be provided a computer program 1303.

The computer program 1303 and, thus, also the computer-readable storage medium 1302, may comprise instructions which, when executed by the data processing unit 1304, or, more generally speaking, a computer, cause the computer or the data processing unit 1304 to carry out at least one of the above-described steps and/or at least one of the above-described methods.

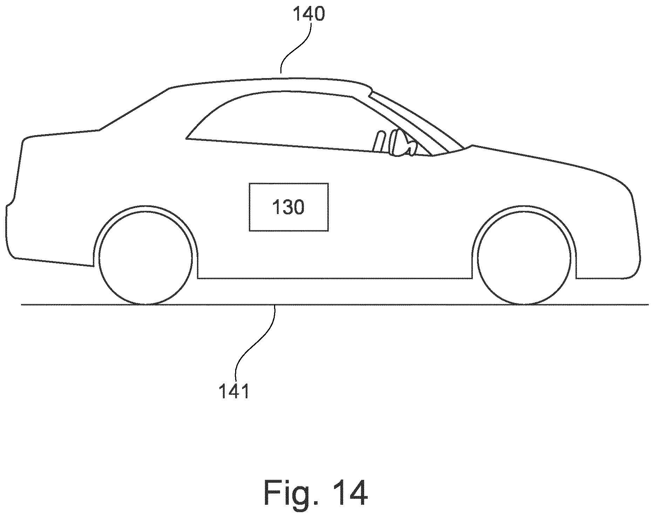

Figure 14 shows a vehicle 140 according to an example of the present disclosure. The vehicle 140 comprises at least one data processing apparatus 130 for performing least one of the above-described steps and/or at least one of the above-described methods. The data processing apparatus 130 enables the vehicle to estimate a friction between a drivable surface (e.g., road) 141 and a tire of the vehicle, when the vehicle 140 is driving on the drivable surface 141.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

LIST OF REFERENCE SIGNS

| | |
|---|---|
| D1 | first data |
| D1-1, D1-2, ..., D1-n | data items of the first data |

| | |
|---|---|
| D1-k | data item of the first data |
| d1-k-1 | longitudinal tire force indicated by k-th data item of first data |
| d1-k-2 | normal tire force indicated by k-th data item of first data |
| d1-k-3 | tire slip indicated by k-th data item of first data |
| d1-k-4 | wheel speed indicated by k-th data item of first data |
| d1-k-5 | vehicle speed indicated by k-th data item of first data |
| D2 | second data |
| D2-1, D2-2, ..., D2-n | data items of the second data |
| D2-k | data item of the second data |
| d2-k-1 | longitudinal tire force indicated by k-th data item of second data |
| d2-k-2 | normal tire force indicated by k-th data item of second data |
| d2-k-3 | tire slip indicated by k-th data item of second data |
| d2-k-4 | wheel speed indicated by k-th data item of second data |
| d2-k-5 | vehicle speed indicated by k-th data item of second data |
| P1 | first phase of friction probing |
| P1 | second phase of friction probing |
| R | reference data |
| R1 | reference data entry |
| r1-1 | longitudinal tire force indicated by reference data entry R1 |
| r1-2 | normal tire force indicated by reference data entry R1 |
| r1-3 | tire slip indicated by reference data entry R1 |
| r1-4 | wheel speed indicated by reference data entry R1 |
| r1-5 | vehicle speed indicated by reference data entry R1 |
| R2 | reference data entry |
| R3 | reference data entry |
| R4 | reference data entry |
| R5 | reference data entry |
| Rk | reference data entry |
| rk-1 | longitudinal tire force indicated by reference data entry Rk |
| rk-2 | normal tire force indicated by reference data entry Rk |
| rk-3 | tire slip indicated by reference data entry Rk |
| rk-4 | wheel speed indicated by reference data entry Rk |
| rk-5 | vehicle speed indicated by reference data entry Rk |
| Rk-1 | data item of reference data entry Rk |
| Rk-1-1 | longitudinal tire force indicated by data item Rk-1 of reference data entry Rk |
| Rk-1-2 | normal tire force indicated by data item Rk-1 of reference data entry Rk |
| Rk-1-3 | tire slip indicated by data item Rk-1 of reference data entry Rk |
| Rk-1-4 | wheel speed indicated by data item Rk-1 of reference data entry Rk |
| Rk-1-5 | vehicle speed indicated by data item Rk-1 of reference data entry Rk |
| Rk-i | data item of reference data entry Rk |
| Rk-i-1 | longitudinal tire force indicated by data item Rk-i of reference data entry Rk |
| Rk-i-2 | normal tire force indicated by data item Rk-i of reference data entry Rk |
| Rk-i-3 | tire slip indicated by data item Rk-i of reference data entry Rk |
| Rk-i-4 | wheel speed indicated by data item Rk-i of reference data entry Rk |
| Rk-i-5 | vehicle speed indicated by data item Rk-i of reference data entry Rk |
| Rk-n | data item of reference data entry Rk |
| Rk-n-1 | longitudinal tire force indicated by data item Rk-n of reference data entry Rk |
| Rk-n-2 | normal tire force indicated by data item Rk-n of reference data entry Rk |
| Rk-n-3 | tire slip indicated by data item Rk-n of reference data entry Rk |
| Rk-n-4 | wheel speed indicated by data item Rk-n of reference data entry Rk |
| Rk-n-5 | vehicle speed indicated by data item Rk-n of reference data entry Rk |
| Rm | reference data entry |
| rm-1 | longitudinal tire force indicated by reference data entry Rm |
| rm-2 | normal tire force indicated by reference data entry Rm |
| rm-3 | tire slip indicated by reference data entry Rm |
| rm-4 | wheel speed indicated by reference data entry Rm |
| rm-5 | vehicle speed indicated by reference data entry Rm |
| RF | at lest one reference friction |

| | |
|---|---|
| RF-1 | reference friction |
| RF-2 | reference friction |
| RF-3 | reference friction |
| RF-4 | reference friction |
| RF-5 | reference friction |
| RF-k | reference friction |
| RF-m | reference friction |
| S 100 | method step |
| 5101 | method step |
| S102 | method step |
| S103 | method step |
| S110 | method step |
| S111 | method step |
| S112 | method step |
| S113 | method step |
| S120 | method step |
| S121 | method step |
| 130 | data processing apparatus |
| 1301 | data storage unit |
| 1302 | computer-readable storage medium |
| 1303 | computer program |
| 1304 | data processing unit |
| 140 | vehicle |
| 141 | drivable surface |

**Claims**

1. A method for estimating a friction (RF, RF-1, ..., RF-k, ..., RF-m, RF-1 to RF-5) between a drivable surface (141) and a tire of a vehicle (140), the vehicle (140) driving on the drivable surface (141), the method comprising:

   - obtaining (S110), during a first phase (P1) of friction probing, first data (D1) comprising a plurality of data items (D1-1, D1-2, ..., D1-n, D1-k) forming a time series and indicating tire forces (d1-k-1 to d1-k-5);
   - obtaining (S111), during a second phase (P2) of friction probing, second data (D2) comprising a plurality of data items (D2-1, D2-2, ..., D2-n, D2-k) forming a time series and indicating tire forces (d2-k-1 to d2-k-5);
   - performing (S112) a comparison of the first data (D1) and the second data (D2) with regard to reference data (R) associated with at least one reference friction (RF, RF-1, ..., RF-k, ..., RF-m, RF-1 to RF-5) between the drivable surface (141) and the tire of the vehicle (140); and
   - indicating (S113), based on a result of the comparison, the friction (RF, RF-1, ..., RF-k, ..., RF-m, RF-1 to RF-5) between the drivable surface (141) and the tire.

2. The method of claim 1, wherein:

   the first data (D1), the second data (D2), and the reference data (R) indicates longitudinal tire forces (d1-k-1, d2-k-1, r1-1, rk-1, rm-1, Rk-1-1, Rk-i-1, Rk-n-1), normal tire forces (d1-k-2, d2-k-2, r1-2, rk-2, rm-2, Rk-1-2, Rk-i-2, Rk-n-2), tire slips (d1-k-3, d2-k-3, r1-3, rk-3, rm-3, Rk-1-3, Rk-i-3, Rk-n-3), wheel speed (d1-k-4, d2-k-4, r1-4, rk-4, rm-4, Rk-1-4, Rk-i-4, Rk-n-4), and/or vehicle speed (d1-k-5, d2-k-5, r1-5, rk-5, rm-5, Rk-1-5, Rk-i-5, Rk-n-5); and/or
   the first phase (P 1) of friction probing is a ramp-up phase of a probing torque or probing force and the second phase (P2) of friction probing is a ramp-down phase of the probing torque or probing force.

3. The method of any one of the preceding claims, wherein the first data (D1) is real-time data obtained during the first phase (P1) of friction probing and the second data (D2) is real-time data obtained during the second phase (P2) of friction probing.

4. The method of any one of the preceding claims, wherein:

   the reference data (R) comprises a reference data set, wherein each reference data entry (R1, ..., Rk, ..., Rm) of the reference data set is associated with a corresponding reference friction (RF, RF-1, ..., RF-k, ..., RF-m, RF-1 to RF-5); and/or

the method comprises obtaining, for at least one reference data entry (R1, ..., Rk, ..., Rm) of the reference data set, a corresponding reference friction (RF, RF-1, ..., RF-k, ..., RF-m, RF-1 to RF-5) for the reference data entry (R1, ..., Rk, ..., Rm); and/or

the obtaining of the corresponding reference friction (RF, RF-1, ..., RF-k, ..., RF-m, RF-1 to RF-5) for the reference data entry (R1, ..., Rk, ..., Rm) comprises estimating the corresponding reference friction (RF, RF-1, ..., RF-k, ..., RF-m, RF-1 to RF-5).

5. The method of claim 4, wherein each reference data entry (R1, ..., Rk, ..., Rm) of the reference data set comprises:

a plurality of data items (Rk-1, ..., Rk-i, ..., Rk-n) forming a time series and indicating tire forces (Rk-1-1 to Rk-1-5, Rk-i-1 to Rk-i-5, Rk-n-1 to Rk-n-1) for the corresponding friction (RF, RF-1, ..., RF-k, ..., RF-m, RF-1 to RF-5) associated with the respective reference data entry (R1, ..., Rk, ..., Rm) of the reference data set; and/or

an average value (rk-1, rk-2, rk-3, rk-4, rk-5) of values of data items (Rk-1, ..., Rk-i, ..., Rk-n) of the plurality of data items.

6. The method according to claim 5, wherein the comparison of the first data (D1) and the second data (D2) with regard to the reference data (R) comprises comparing, with regard to each reference data entry (R1, ..., Rk, ..., Rm) of the reference data set, the average value (rk-1, rk-2, rk-3, rk-4, rk-5) of the reference data (R) with a first average value, which is average value of values of data items of the plurality of data items (D 1-1, D1-2, ..., D1-n, D1-k) of the first data (D1), and with a second average value, which is average value of values of data items of the plurality of data items (D2-1, D2-2, ..., D2-n, D2-k) of the second data (D2).

7. The method according to claim 6, wherein the indicating, based on the result of the comparison, the friction (RF, RF-1, ..., RF-k, ..., RF-m, RF-1 to RF-5) between the drivable surface (141) and the tire comprises indicating, as the friction (RF, RF-1, ..., RF-k, ..., RF-m, RF-1 to RF-5) between the drivable surface (141) and the tire, a friction (RF, RF-1, ..., RF-k, ..., RF-m, RF-1 to RF-5) associated with the reference data entry (R1, ..., Rk, ..., Rm) of the reference data set, the average value (rk-1, rk-2, rk-3, rk-4, rk-5) of which has the smallest distance to the first average value and the second average value in comparison to the average values of other reference data entries of the reference data set.

8. The method according to any one of claim 5, wherein the comparison of the first data (D1) and the second data (D2) with regard to the reference data (R) comprises comparing, with regard to each reference data entry (R1, ..., Rk, ..., Rm) of the reference data set, a curve of values of data items of the plurality of data items (Rk-1, ..., Rk-i, ..., Rk-n) of the reference data entry (R1, ..., Rk, ..., Rm) with a first curve of values of data items of the plurality of data items (D1-1, D1-2, ..., D1-n, D1-k) of the first data (D1), and with a second curve of values of data items of the plurality of data items (D2-1, D2-2, ..., D2-n, D2-k) of the second data (D2).

9. The method according to claim 8, wherein the indicating, based on the result of the comparison, the friction (RF, RF-1, ..., RF-k, ..., RF-m, RF-1 to RF-5) between the drivable surface (141) and the tire comprises indicating, as the friction (RF, RF-1, ..., RF-k, ..., RF-m, RF-1 to RF-5) between the drivable surface (141) and the tire, a reference friction (RF, RF-1, ..., RF-k, ..., RF-m, RF-1 to RF-5) associated with the reference data entry (R1, ..., Rk, ..., Rm) of the reference data set, curve of values of which is closer to the first curve of values and the second curve of values in comparison to curves of values of other reference data entries of the reference data set.

10. The method according to any one of claims 1 to 5, wherein:

the performing the comparison of the first data (D1) and the second data (D2) with regard to reference data (R) for at least one reference friction (RF, RF-1, ..., RF-k, ..., RF-m, RF-1 to RF-5) comprises determining if an average value of the tire forces (d1-k-1 to d1-k-5) of the first data (D1) is higher than an average value of the tire forces (d2-k-1 to d2-k-5) of the second data (D2) and if a difference between the average value of the tire forces (d1-k-1 to d1-k-5) of the first data (D1) and the average value of the tire forces (d2-k-1 to d2-k-5) of the second data (D2) is higher than a threshold value associated with a friction (RF, RF-1, ..., RF-k, ..., RF-m, RF-1 to RF-5) for a slippery drivable surface (141) in the reference data (R); and

the indicating, based on the result of the comparison, the friction (RF, RF-1, ..., RF-k, ..., RF-m, RF-1 to RF-5) between the drivable surface (141) and the tire comprises indicating, as the between the drivable surface (141) and the tire, the friction (RF, RF-1, ..., RF-k, ..., RF-m, RF-1 to RF-5) for a slippery drivable surface (141) in the reference data (R), if the average value of the tire forces (d1-k-1 to d1-k-5) of the first data (D1) is higher than the average value of the tire forces (d2-k-1 to d2-k-5) of the second data (D2) and if the difference between the average value of the tire forces (d1-k-1 to d1-k-5) of the first data (D1) and the average value of the tire forces (d2-k-1 to d2-k-5) of the second data (D2) is higher than the threshold value associated with the friction (RF, RF-1, ..., RF-k, ..., RF-m, RF-1 to RF-5) for the slippery drivable surface (141), and indicating high friction (RF, RF-1, ..., RF-k, ..., RF-m, RF-1 to RF-5) drivable surface (141) otherwise.

11. A method for controlling a vehicle (140), the method comprising:

- estimating a friction (RF, RF-1, ..., RF-k, ..., RF-m, RF-1 to RF-5) between a drivable surface (141) and a tire of the vehicle (140) using the method according to any one of the preceding claims; and
- causing adjustment of a driving parameter of the vehicle (140) based on the estimated friction (RF, RF-1, ..., RF-k, ..., RF-m, RF-1 to RF-5).

12. A data processing apparatus (130) comprising means for carrying out the steps of a method for estimating a friction (RF, RF-1, ..., RF-k, ..., RF-m, RF-1 to RF-5) between a drivable surface (141) and a tire of a vehicle (140) according to any one of claims 1 to 10 and/or for carrying out the steps of a method for controlling the vehicle (140) according to claim 11.

13. A computer program (1303) comprising instructions which, when the program (1303) is executed by a computer, cause the computer to carry out the steps of a method for estimating a friction (RF, RF-1, ..., RF-k, ..., RF-m, RF-1 to RF-5) between a drivable surface (141) and a tire of a vehicle (140) according to any one of claims 1 to 10 and/or to carry out the steps of a method for controlling the vehicle (140) according to claim 11.

14. A computer-readable storage medium (1302) comprising instructions which, when executed by a computer, cause the computer to carry out the steps of a method for estimating a friction (RF, RF-1, ..., RF-k, ..., RF-m, RF-1 to RF-5) between a drivable surface (141) and a tire of a vehicle (140) according to any one of claims 1 to 10 and/or to carry out the steps of a method for controlling the vehicle (140) according to claim 11.

15. A vehicle (140) comprising a data processing apparatus (130) of claim 12.

Fig. 1

| D1-k |
|---|
| d1-k-1 |
| d1-k-2 |
| d1-k-3 |
| d1-k-4 |
| d1-k-5 |

| D2-k |
|---|
| d2-k-1 |
| d2-k-2 |
| d2-k-3 |
| d2-k-4 |
| d2-k-5 |

## Fig. 2

D1

| D1-1 |
| D1-2 |
| ... |
| D1-n |

D2

| D2-1 |
| D2-2 |
| ... |
| D2-n |

| RF |
| R |

## Fig. 3

Fig. 4

Fig. 5

Fig. 6

Fig. 7

Fig. 8

Fig. 9

NO

| S100 |

YES

NO

| S101 |

YES

| S103 | | S102 |

## Fig. 10

| S110 |

| S111 |

| S112 |

| S113 |

## Fig. 11

Fig. 12

Fig. 13

Fig. 14

**EUROPEAN SEARCH REPORT**

Application Number

EP 24 22 1259

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 065 067 B2 (SVENDENIUS JACOB [SE]; GAEFVERT MAGNUS [SE] ET AL.) 22 November 2011 (2011-11-22) | 1-5,8,9, 11-15 | INV. B60T8/171 B60T8/172 |
| A | * column 1, line 26 - column 13, line 53; claims 1-11 * | 6,7,10 | B60T8/1763 B60W40/068 |
| A | WO 2020/183871 A1 (MITSUBISHI ELECTRIC CORP [JP]) 17 September 2020 (2020-09-17) * the whole document * | 1,11 | |
| A | CHOI MOORYONG ET AL: "Linearized Recursive Least Squares Methods for Real-Time Identification of Tire-Road Friction Coeffic", IEEE TRANSACTIONS ON VEHICULAR TECHNOLOGY, IEEE, USA, vol. 62, no. 7, 1 September 2013 (2013-09-01), pages 2906-2918, XP011526713, ISSN: 0018-9545, DOI: 10.1109/TVT.2013.2260190 [retrieved on 2013-09-11] * the whole document * | 1,11 | |
| | | | **TECHNICAL FIELDS SEARCHED (IPC)** |
| A | US 2021/072147 A1 (YANG DERONG [SE] ET AL) 11 March 2021 (2021-03-11) * the whole document * | 1,11 | B60T B60W |
| A | US 2021/188284 A1 (HASSEL TOMAS MARTIN [SE] ET AL) 24 June 2021 (2021-06-24) * the whole document * | 1,11 | |

The present search report has been drawn up for all claims

| Place of search | Date of completion of the search | Examiner |
|---|---|---|
| Munich | 27 May 2025 | Graniou, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1259

This annex lists the patent family members relating to the patent documents cited in  the above-mentioned European search report.
The members are as contained in the European Patent Office EDP file on
The European Patent Office is in no way liable for these particulars which are merely given for the purpose of information.

27-05-2025

| Patent document cited in search report | | Publication date | Patent family member(s) | | Publication date |
|---|---|---|---|---|---|
| US 8065067 | B2 | 22-11-2011 | AT | E528185 T1 | 15-10-2011 |
| | | | EP | 1964736 A1 | 03-09-2008 |
| | | | US | 2008243348 A1 | 02-10-2008 |
| WO 2020183871 | A1 | 17-09-2020 | CN | 113573966 A | 29-10-2021 |
| | | | EP | 3938263 A1 | 19-01-2022 |
| | | | JP | 7285971 B2 | 02-06-2023 |
| | | | JP | 2022523276 A | 21-04-2022 |
| | | | US | 2020290577 A1 | 17-09-2020 |
| | | | WO | 2020183871 A1 | 17-09-2020 |
| US 2021072147 | A1 | 11-03-2021 | NONE | | |
| US 2021188284 | A1 | 24-06-2021 | NONE | | |

EPO FORM P0459

For more details about this annex : see Official Journal of the European Patent Office, No. 12/82